(19) Europäisches Patentamt / European Patent Office / Office européen des brevets

(11) **EP 4 535 942 A1**

(12) **EUROPEAN PATENT APPLICATION**
published in accordance with Art. 153(4) EPC

(43) Date of publication:
09.04.2025 Bulletin 2025/15

(21) Application number: 22944427.8

(22) Date of filing: 28.06.2022

(51) International Patent Classification (IPC):
**H05K 5/02** *(2006.01)*

(52) Cooperative Patent Classification (CPC):
Y02B 20/40

(86) International application number:
**PCT/CN2022/101776**

(87) International publication number:
**WO 2023/231109 (07.12.2023 Gazette 2023/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 31.05.2022 CN 202210612325

(71) Applicant: OPT Machine Vision Tech Co., Ltd.
Chang'an Town
Dongguan City, Guangdong Province 523000
(CN)

(72) Inventor: LI, Zhirong
Chang'an Town Dongguan, Guangdong 523000
(CN)

(74) Representative: Zacco Sweden AB
P.O. Box 5581
Löjtnantsgatan 21
114 85 Stockholm (SE)

(54) **QUICK SWITCHING CIRCUIT FOR BRIGHTNESS OF LIGHT SOURCE**

(57) Provided is a fast switching circuit for light source brightness. The fast switching circuit for light source brightness includes a communication module, a master control module, a digital-to-analog conversion module, a multi-channel current buffer module, a constant current adjustment module and a light source module. The communication module is connected to the master control module. The digital-to-analog conversion module is connected to the master control module and the multi-channel current buffer module. The multi-channel current buffer module is connected to the master control module and the constant current adjustment module. The constant current adjustment module is connected to the light source module. In the present disclosure, current values corresponding to multiple brightness values are buffered so that direct hardware switching can be enabled when needed, thereby greatly reducing the time required for light source brightness switching, greatly increasing the stroboscopic speed of a light source controller and having a relatively high market promotion value.

FIG. 1

## Description

This application claims priority to Chinese Patent Application No. 202210612325.X filled with the China National Intellectual Property Administration (CNIPA) on May. 31, 2022 and entitled "FAST SWITCHING CIRCUIT FOR LIGHT SOURCE BRIGHTNESS", disclosure of which is incorporated herein by reference in its entirety.

### TECHNICAL FIELD

The present disclosure relates the field of light source control technologies and, in particular, to a fast switching circuit for light source brightness.

### BACKGROUND

As the production efficiency becomes higher, to-be-detected workpieces become more intricate, and the speed of machine vision photographing becomes faster, requirements on light source brightness become stricter, and requirements on the light source brightness vary each time machine vision takes a photograph.

At present, many light source controllers basically adjust the light source brightness by using a digital-to-analog conversion chip. Since such a chip requires to be controlled by a master control in a certain timing, each communication and output conversion requires a relatively long time, resulting in a longer time required for a light source controller to change the light source brightness. This causes the stroboscopic speed of the light source controller to be unable to keep up with the photographing speed of a camera.

Therefore, there is a need to improve the existing art.

The preceding information is provided as background information merely to facilitate the understanding of the present disclosure, and no determination or admission is made as to whether any of the preceding content can be used as the existing art with respect to the present disclosure.

### SUMMARY

The present disclosure provides a fast switching circuit for light source brightness to solve the shortcomings in the existing art.

To achieve the preceding object, the present disclosure provides the solutions below.

A fast switching circuit for light source brightness is provided and includes a communication module, a master control module, a digital-to-analog conversion module, a multi-channel current buffer module, a constant current adjustment module and a light source module.

The communication module is connected to the master control module.

The digital-to-analog conversion module is connected to the master control module and the multi-channel current buffer module.

The multi-channel current buffer module is connected to the master control module and the constant current adjustment module.

The constant current adjustment module is connected to the light source module.

The communication module is configured to receive a to-be-used current value and pre-store the current value in the master control module.

The master control module is configured to output a conversion signal to the digital-to-analog conversion module after receiving the pre-stored current value.

The digital-to-analog conversion module is configured to output a corresponding current value after receiving the conversion signal.

The multi-channel current buffer module is configured to buffer the current value output by the digital-to-analog conversion module.

The communication module is further configured to receive a brightness switching instruction and transmit the brightness switching instruction to the master control module.

The master control module is further configured to output a control signal to control the multi-channel current buffer module after receiving the brightness switching instruction.

The multi-channel current buffer module is further configured to output the buffered current value to the constant current adjustment module after receiving the control signal.

The constant current adjustment module is configured to change a current value output to the light source module to adjust brightness of the light source module after receiving the current value input by the multi-channel current buffer module.

Further, in the fast switching circuit for light source brightness, each master control module has at least three output terminals, the digital-to-analog conversion module has at least two output terminals, and the multi-channel current buffer module includes at least two current buffer modules.

A first input terminal of each current buffer module is connected to a respective one of the at least two output terminals of the digital-to-analog conversion module, and a second input terminal of each current buffer module is connected to a respective one of the at least three output terminals of the master control module.

An output terminal of each current buffer module is connected to an input terminal of the constant current adjustment module.

An input terminal of the digital-to-analog conversion module is connected to a respective one of the at least three output terminals of the master control module.

An output terminal of the communication module is connected to an input terminal of the master control module.

An output terminal of the constant current adjustment module is connected to an input terminal of the light source module.

Further, in the fast switching circuit for light source brightness, the communication module includes a serial port conversion chip U7 and an electrical connector J1.

A GND pin, an RIN pin and a TOUT pin of the serial port conversion chip U7 are connected to the electrical connector J1, a TIN pin and an ROUT pin of the serial port conversion chip U7 are connected to the master control module, and a VCC pin of the serial port conversion chip U7 is connected to a pull-up voltage source.

Further, in the fast switching circuit for light source brightness, the master control module includes a master control chip U1, a first resistance R1, a second resistance R2, a third resistance R3, a first capacitance C1, a second capacitance C2, a third capacitance C3 and a crystal oscillator Y1.

A U1_TX pin of the master control chip U1 is connected to the TIN pin of the serial port conversion chip U7, and a U1_RX of the master control chip U1 is connected to the ROUT pin of the serial port conversion chip U7.

APC4 pin and a PC5 pin of the master control chip U1 are connected to the multi-channel current buffer module, a PC0 pin, a PC1 pin, a PC2 pin and a PC3 pin of the master control chip U1 are connected to the digital-to-analog conversion module, and an NRST pin of the master control chip U1 is grounded.

One terminal of the first resistance R1 is connected to a VDD pin of the master control chip U1, the other terminal of the first resistance R1 is grounded, and the VDD pin of the master control chip U1 is connected to the pull-up voltage source.

One terminal of the first capacitance C1 is connected to a VSS pin of the master control chip U1, and the other terminal of the first capacitance C1 is grounded.

One terminal of the second resistance R2 is connected to a BOOT1 pin of the master control chip U1, and the other terminal of the second resistance R2 is grounded.

One terminal of the third resistance R3 is connected to a BOOT2 pin of the master control chip U1, and the other terminal of the third resistance R3 is grounded.

One terminal of the second capacitance C2 is connected to an OSC_0 pin of the master control chip U1, and the other terminal of the second capacitance C2 is grounded.

One terminal of the third capacitance C3 is connected to an OCS_1 pin of the master control chip U1, and the other terminal of the third capacitance C3 is grounded.

One terminal of the crystal oscillator Y1 is connected between the second capacitance C2 and the OSC_0 pin of the master control chip U1, and the other terminal of the crystal oscillator Y1 is connected between the third capacitance C3 and the OCS_1 pin of the master control chip U1.

Further, in the fast switching circuit for light source brightness, the digital-to-analog conversion module includes an analog-to-digital conversion chip U2.

A VA pin, a Vrefl pin and a Vref2 pin of the analog-to-digital conversion chip U2 are connected to the pull-up voltage source.

An SYNC pin of the analog-to-digital conversion chip U2 is connected to the PC3 pin of the master control chip U1, an SCLK pin of the analog-to-digital conversion chip U2 is connected to the PC2 pin of the master control chip U1, a D1 pin of the analog-to-digital conversion chip U2 is connected to the PC1 pin of the master control chip U1, a DOUT pin of the analog-to-digital conversion chip U2 is connected to the PC0 pin of the master control chip U1, and a GND pin of the analog-to-digital conversion chip U2 is grounded.

A VoutH pin and a VoutG pin of the analog-to-digital conversion chip U2 are connected to the multi-channel current buffer module.

Further, in the fast switching circuit for light source brightness, the multi-channel current buffer module includes a follower circuit and two current buffer modules, and the two current buffer modules are a first current buffer module and a second current buffer module.

The first current buffer module includes a first operational amplifier U3, a first N-channel metal oxide semiconductor (NMOS) transistor Q1, a fifth resistance R5, a sixth resistance R6, a seventh resistance R7 and an eighth resistance R8.

The second current buffer module includes a second operational amplifier U4, a second NMOS transistor Q2, a fourth resistance R4, a ninth resistance R9, a tenth resistance R10 and an eleventh resistance R11.

The follower circuit includes a third operational amplifier U5, a twelfth resistance R12 and a thirteenth resistance R13.

A positive input terminal of the first operational amplifier U3 is connected to the VoutH pin of the analog-to-digital conversion chip U2, a negative input terminal of the first operational amplifier U3 is grounded through the eighth resistance R8, and an output terminal of the first operational amplifier U3 is connected to one terminal of the sixth resistance R6.

The other terminal of the sixth resistance R6 is connected to one terminal of the seventh resistance R7, and the other terminal of the seventh resistance R7 is connected to a positive input terminal of the third operational amplifier U5.

One terminal of the fifth resistance R5 is connected between the output terminal of the first operational amplifier U3 and the sixth resistance R6, and the other terminal of the fifth resistance R5 is connected between the negative input terminal of the first operational amplifier U3 and the eighth resistance R8.

A gate of the first NMOS transistor Q1 is connected to the PC4 pin of the master control chip U1, a source of the first NMOS transistor Q1 is grounded, and a drain of the first NMOS transistor Q1 is connected between the sixth resistance R6 and the seventh resistance R7.

A positive input terminal of the second operational amplifier U4 is connected to the VoutG pin of the analog-to-digital conversion chip U2, a negative input terminal of the second operational amplifier U4 is grounded through the fourth resistance R4, and an output terminal of the second operational amplifier U4 is connected to one terminal of the tenth resistance R10.

The other terminal of the tenth resistance R10 is connected to one terminal of the eleventh resistance R11, and the other terminal of the eleventh resistance R11 is connected to the positive input terminal of the third operational amplifier U5.

One terminal of the ninth resistance R9 is connected between the output terminal of the second operational amplifier U4 and the tenth resistance R10, and the other terminal of the ninth resistance R9 is connected between the negative input terminal of the second operational amplifier U4 and the fourth resistance R4.

A gate of the second NMOS transistor Q2 is connected to the PC5 pin of the master control chip U1, a source of the second NMOS transistor Q2 is grounded, and a drain of the second NMOS transistor Q2 is connected between the tenth resistance R10 and the eleventh resistance R11.

A negative input terminal of the third operational amplifier U5 is grounded through the twelfth resistance R12 and the thirteenth resistance R13, and an output terminal of the third operational amplifier U5 is connected between the twelfth resistance R12 and the thirteenth resistance R13 and is connected to the constant current adjustment module.

Further, in the fast switching circuit for light source brightness, a power supply terminal of the first operational amplifier U3, a power supply terminal of the second operational amplifier U4 and a power supply terminal of the third operational amplifier U5 are connected to a pull-up voltage source, and a grounding terminal of the first operational amplifier U3, a grounding terminal of the second operational amplifier U4 and a grounding terminal of the third operational amplifier U5 are grounded.

Further, in the fast switching circuit for light source brightness, the constant current adjustment module includes a fourth operational amplifier U6, a third NMOS transistor Q3, a fourteenth resistance R14 and a fifteenth resistance R15.

A positive input terminal of the fourth operational amplifier U6 is connected to the output terminal of the third operational amplifier U5, a negative input terminal of the fourth operational amplifier U6 is grounded through the fourteenth resistance R14 and the fifteenth resistance R15, and an output terminal of the fourth operational amplifier U6 is connected to a gate of the third NMOS transistor Q3.

A source of the third NMOS transistor Q3 is connected between the fourteenth resistance R14 and the fifteenth resistance R15, and a drain of the third NMOS transistor Q3 is connected to the light source module.

Further, in the fast switching circuit for light source brightness, a power supply terminal of the fourth operational amplifier U6 is connected to the pull-up voltage source, and a grounding terminal of the fourth operational amplifier U6 is grounded.

Further, in the fast switching circuit for light source brightness, the light source module is composed of a plurality of light-emitting diodes.

Compared with the existing art, embodiments of the present disclosure have the beneficial effects below.

The fast switching circuit for light source brightness provided in embodiments of the present disclosure is composed of the communication module, the master control module, the digital-to-analog conversion module, the multi-channel current buffer module, the constant current adjustment module and the light source module. Current values corresponding to multiple brightness values are buffered so that direct hardware switching can be enabled when needed, thereby greatly reducing the time required for light source brightness switching, greatly increasing the stroboscopic speed of a light source controller and having a relatively high market promotion value.

BRIEF DESCRIPTION OF DRAWINGS

To illustrate the technical solutions in embodiments of the present disclosure or the technical solutions in the existing art more clearly, drawings used in the description of the embodiments or the existing art will be briefly described below. Apparently, the drawings described below illustrate only part of the embodiments of the present disclosure, and those of ordinary skill in the art may obtain other drawings based on the drawings described below on the premise that no creative work is done.

    FIG. 1 is a diagram illustrating circuit modules of a fast switching circuit for light source brightness according to embodiments of the present disclosure.

    FIG. 2 is a diagram illustrating a circuit principle of a fast switching circuit for light source brightness according to embodiments of the present disclosure

DETAILED DESCRIPTION

To make the purposes, features and advantages of the present disclosure more apparent and easier to understand, the technical solutions in the embodiments of the present disclosure will be described clearly and completely in conjunction with the drawings in the embodiments of the present disclosure. Apparently, the embodiments described below are part, not all of the embodiments of the present disclosure. Based on the embodiments of the present disclosure, all other embodiments obtained by those of ordinary skill in the art are within the scope of the present disclosure on the premise that no creative work is done.

In the description of the present disclosure, it is to be understood that when a component is described as being "connected to" another component, it may be directly connected to the other component, or intervening components may be present. When a component is described as being "disposed on" another component, it may be directly disposed on the other component, or intervening components may be present.

In addition, it is to be understood that orientations or position relations indicated by terms such as "long", "short", "inside" and "outside" are based on the drawings. These orientations or position relations are intended only to facilitate the description of the present disclosure and not to indicate or imply that a device or element referred to must have such particular orientations or must be configured or operated in such particular orientations. Thus, these orientations or position relations are not to be construed as limiting the present disclosure.

The technical solutions of the present disclosure are further described hereinafter in conjunction with the drawings and the embodiments.

Embodiment one

In view of the defects in the preceding existing light source brightness adjustment technology, the applicant actively conducts research and innovation based on rich practical experience and professional knowledge in design and manufacture in this field for many years, and in conjunction with the application of academic theories, hoping to create a technology that can solve the defects in the existing technology and make the light source brightness adjustment technology more practical. After continuous research, design, repeated trial samples and improvements, the present disclosure with practical value is finally created.

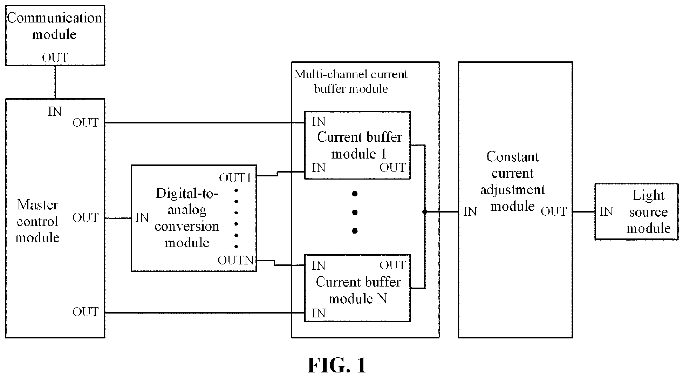

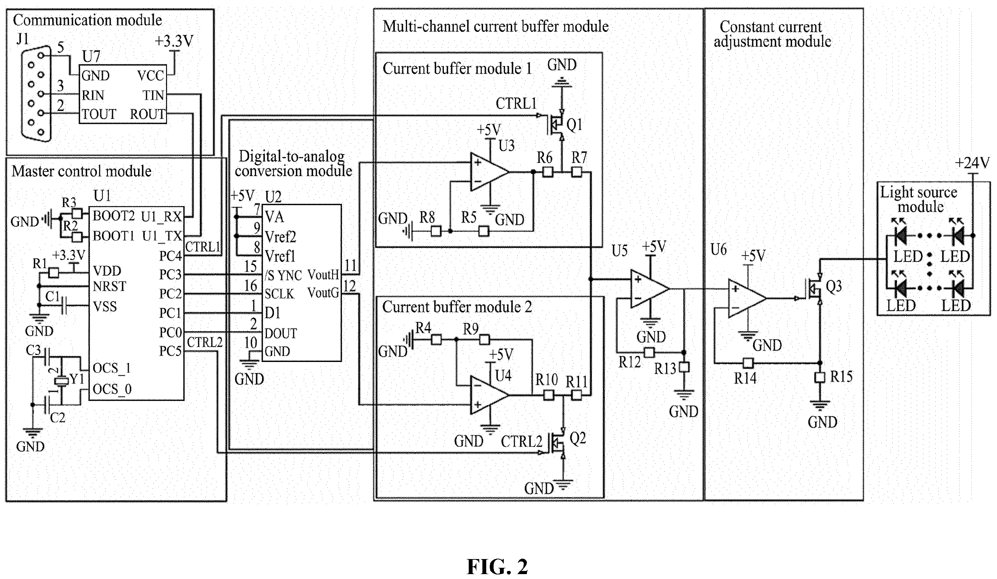

Referring to FIG. 1 and FIG. 2, embodiments of the present disclosure provide a fast switching circuit for light source brightness. The fast switching circuit for light source brightness includes a communication module, a master control module, a digital-to-analog conversion module, a multi-channel current buffer module, a constant current adjustment module and a light source module.

The communication module is connected to the master control module.

The digital-to-analog conversion module is connected to the master control module and the multi-channel current buffer module.

The multi-channel current buffer module is connected to the master control module and the constant current adjustment module.

The constant current adjustment module is connected to the light source module.

The communication module is configured to receive a to-be-used current value and pre-store the current value in the master control module.

The master control module is configured to output a conversion signal to the digital-to-analog conversion module after receiving the pre-stored current value.

The digital-to-analog conversion module is configured to output a corresponding current value after receiving the conversion signal.

The multi-channel current buffer module is configured to buffer the current value output by the digital-to-analog conversion module.

The communication module is further configured to receive a brightness switching instruction and transmit the brightness switching instruction to the master control module.

The master control module is further configured to output a control signal for controlling the multi-channel current buffer module after receiving the brightness switching instruction.

The multi-channel current buffer module is further configured to output the buffered current value to the constant current adjustment module after receiving the control signal.

The constant current adjustment module is configured to change a current value output to the light source module to adjust brightness of the light source module after receiving the current value input by the multi-channel current buffer module.

In this embodiment, each master control module has at least three output terminals, the digital-to-analog conversion module has at least two output terminals, and the multi-channel current buffer module includes at least two current buffer modules.

A first input terminal of each current buffer module is connected to a respective output terminal of the digital-to-analog conversion module, and a second input terminal of each current buffer module is connected to a respective output terminal of the master control module.

An output terminal of each current buffer module is connected to an input terminal of the constant current adjustment module.

An input terminal of the digital-to-analog conversion module is connected to a respective output terminal of the master control module.

An output terminal of the communication module is connected to an input terminal of the master control module.

An output terminal of the constant current adjustment module is connected to an input terminal of the light source module.

In this embodiment, the communication module includes a serial port conversion chip U7 and an electrical connector J1.

A GND pin, an RIN pin and a TOUT pin of the serial port conversion chip U7 are connected to the electrical connector J1, a TIN pin and an ROUT pin of the serial port conversion chip U7 are connected to the master control module, and a VCC pin of the serial port conversion chip U7 is connected to a pull-up voltage source (+3.3 V).

It is to be noted that a chip with a product model of MAX3232 may be selected as the serial port conversion chip U7, and an electrical connector with a product model of DB9 may be selected as the electrical connector J1.

In this embodiment, the master control module includes a master control chip U1, a first resistance R1, a second resistance R2, a third resistance R3, a first capacitance C1, a second capacitance C2, a third capacitance C3 and a crystal oscillator Y1.

A U1_TX pin of the master control chip U1 is connected to the TIN pin of the serial port conversion chip U7, and a U1_RX of the master control chip U1 is connected to the ROUT pin of the serial port conversion chip U7.

APC4 pin and a PC5 pin of the master control chip U1 are connected to the multi-channel current buffer module, a PC0 pin, a PC1 pin, a PC2 pin and a PC3 pin of the master control chip U1 are connected to the digital-to-analog conversion module, and an NRST pin of the master control chip U1 is grounded.

One terminal of the first resistance R1 is connected to a VDD pin of the master control chip U1, the other terminal of the first resistance R1 is grounded, and the VDD pin of the master control chip U1 is connected to the pull-up voltage source (+3.3 V).

One terminal of the first capacitance C1 is connected to a VSS pin of the master control chip U1, and the other terminal of the first capacitance C1 is grounded.

One terminal of the second resistance R2 is connected to a BOOT1 pin of the master control chip U1, and the other terminal of the second resistance R2 is grounded.

One terminal of the third resistance R3 is connected to a BOOT2 pin of the master control chip U1, and the other terminal of the third resistance R3 is grounded.

One terminal of the second capacitance C2 is connected to an OSC_0 pin of the master control chip U1, and the other terminal of the second capacitance C2 is grounded.

One terminal of the third capacitance C3 is connected to an OCS_1 pin of the master control chip U1, and the other terminal of the third capacitance C3 is grounded.

One terminal of the crystal oscillator Y1 is connected between the second capacitance C2 and the OSC_0 pin of the master control chip U1, and the other terminal of the crystal oscillator Y1 is connected between the third capacitance C3 and the OCS_1 pin of the master control chip U1.

It is to be noted that a chip with a product model of STM32F103 may be selected as the master control chip U1, the resistance value of the first resistance R1 may be selected as 1 kΩ, the resistance value of the second resistance R2 may be selected as 10 kΩ, the resistance value of the third resistance R3 may be selected as 10 kΩ, the capacitance value of the first capacitance C1 may be selected as 0.1 uF, the capacitance value of the second capacitance C2 may be selected as 24 pF, the capacitance value of the third capacitance C3 may be selected as 24 pF, and the frequency of the crystal oscillator Y1 may be selected as 8 Mhz.

In this embodiment, the digital-to-analog conversion module includes an analog-to-digital conversion chip U2.

A VA pin, a Vrefl pin and a Vref2 pin of the analog-to-digital conversion chip U2 are connected to a pull-up voltage source (+5 V).

An SYNC pin of the analog-to-digital conversion chip U2 is connected to the PC3 pin of the master control chip U1, an SCLK pin of the analog-to-digital conversion chip U2 is connected to the PC2 pin of the master control chip U1, a D1 pin of the analog-to-digital conversion chip U2 is connected to the PC1 pin of the master control chip U1, a DOUT pin of the analog-to-digital conversion chip U2 is connected to the PC0 pin of the master control chip U1, and a GND pin of the analog-to-digital conversion chip U2 is grounded.

A VoutH pin and a VoutG pin of the analog-to-digital conversion chip U2 are connected to the multi-channel current buffer module.

It is to be noted that a chip with a product model of DAC108S085 may be selected as the analog-to-digital conversion chip U2.

In this embodiment, the multi-channel current buffer module includes a follower circuit and two current buffer modules, and the two current buffer modules are a first current buffer module (that is, current buffer module 1) and a second current buffer module (that is, current buffer module 2), respectively.

The first current buffer module includes a first operational amplifier U3, a first NMOS transistor Q1, a fifth resistance R5, a sixth resistance R6, a seventh resistance R7 and an eighth resistance R8.

The second current buffer module includes a second operational amplifier U4, a second NMOS transistor Q2, a fourth resistance R4, a ninth resistance R9, a tenth resistance R10 and an eleventh resistance R11.

The follower circuit includes a third operational amplifier U5, a twelfth resistance R12 and a thirteenth resistance R13.

A positive input terminal of the first operational amplifier U3 is connected to the VoutH pin of the analog-to-digital conversion chip U2, a negative input terminal of the first operational amplifier U3 is grounded through the eighth resistance R8, and an output terminal of the first operational amplifier U3 is connected to one terminal of the sixth resistance R6.

The other terminal of the sixth resistance R6 is connected to one terminal of the seventh resistance R7, and the other terminal of the seventh resistance R7 is connected to a positive input terminal of the third operational amplifier U5.

One terminal of the fifth resistance R5 is connected between the output terminal of the first operational amplifier U3 and the sixth resistance R6, and the other terminal of the fifth resistance R5 is connected between the negative input terminal of the first operational amplifier U3 and the eighth resistance R8.

A gate of the first NMOS transistor Q1 is connected to the PC4 pin of the master control chip U1, a source of the first NMOS transistor Q1 is grounded, and a drain of the first NMOS transistor Q1 is connected between the sixth resistance R6 and the seventh resistance R7.

A positive input terminal of the second operational amplifier U4 is connected to the VoutG pin of the analog-to-digital conversion chip U2, a negative input terminal of the second operational amplifier U4 is grounded through the fourth resistance R4, and an output terminal of the second operational amplifier U4 is connected to one terminal of the tenth resistance R10.

The other terminal of the tenth resistance R10 is connected to one terminal of the eleventh resistance R11, and the other terminal of the eleventh resistance R11 is connected to the positive input terminal of the third operational amplifier U5.

One terminal of the ninth resistance R9 is connected between the output terminal of the second operational amplifier U4 and the tenth resistance R10, and the other terminal of the ninth resistance R9 is connected between the negative input terminal of the second operational amplifier U4 and the fourth resistance R4.

A gate of the second NMOS transistor Q2 is connected to the PC5 pin of the master control chip U1, a source of the second NMOS transistor Q2 is grounded, and a drain of the second NMOS transistor Q2 is connected between the tenth resistance R10 and the eleventh resistance R11.

A negative input terminal of the third operational amplifier U5 is grounded through the twelfth resistance R12 and the thirteenth resistance R13, and an output terminal of the third operational amplifier U5 is connected between the twelfth resistance R12 and the thirteenth resistance R13 and is connected to the constant current adjustment module.

It is to be noted that the first operational amplifier U3, the second operational amplifier U4 and the third operational amplifier U5 each may be an operational amplifier with a product model of LM258 having an amplification factor K equal to 3, the first NMOS transistor Q1 and the second NMOS transistor Q2 may each be an NMOS transistor with a product model of RU207C, the resistance value of the fifth resistance R5 may be selected as 2 KΩ, the resistance value of the sixth resistance R6 may be selected as 1 KΩ, the resistance value of the seventh resistance R7 may be selected as 1 KΩ, the resistance value of the eighth resistance R8 may be selected as 1 KΩ, the resistance value of the fourth resistance R4 may be selected as 1 KΩ, the resistance value of the ninth resistance R9 may be selected as 2 KΩ, the resistance value of the tenth resistance R10 may be selected as 1 KΩ, the resistance value of the eleventh resistance R11 may be selected 1 KΩ, the resistance value of the twelfth resistance R12 may be selected as 1 KΩ, and the resistance value of the thirteen resistance R13 may be selected as 10 KΩ.

In this embodiment, a power supply terminal of the first operational amplifier U3, a power supply terminal of the second operational amplifier U4 and a power supply terminal of the third operational amplifier U5 are connected to the pull-up voltage source (+5 V), and a grounding terminal of the first operational amplifier U3, a grounding terminal of the second operational amplifier U4 and a grounding terminal of the third operational amplifier U5 are grounded.

In this embodiment, the constant current adjustment module includes a fourth operational amplifier U6, a third NMOS transistor Q3, a fourteenth resistance R14 and a fifteenth resistance R15.

A positive input terminal of the fourth operational amplifier U6 is connected to the output terminal of the third operational amplifier U5, a negative input terminal of the fourth operational amplifier U6 is grounded through the fourteenth resistance R14 and the fifteenth resistance R15, and an output terminal of the fourth operational amplifier U6 is connected to a gate of the third NMOS transistor Q3.

A source of the third NMOS transistor Q3 is connected between the fourteenth resistance R14 and the fifteenth resistance R15, and a drain of the third NMOS transistor Q3 is connected to the light source module.

It is to be noted that an operational amplifier with a product model of LM258 may be selected as the fourth operational amplifier U6, an NMOS transistor with a product model of 50N06 may be selected as the third NMOS transistor Q3, the resistance value of the fourteenth resistance R14 may be selected as 1 KΩ, and the resistance value of the fifteenth resistance R15 may be selected as 10 KΩ.

In this embodiment, a power supply terminal of the fourth operational amplifier U6 is connected to the pull-up voltage source (+5 V), and a grounding terminal of the fourth operational amplifier U6 is grounded.

In this embodiment, the light source module is composed of multiple light-emitting diodes.

Specifically, several light-emitting diodes after being connected in series are connected in parallel to the other several light-emitting diodes and then are connected to a pull-up voltage source (+24 V).

The implementation principle includes the steps below.

(1) To-be-used current values, including $I_1$ equal to 50 mA and $I_2$ equal to 100 mA, are pre-stored in the master control module through the communication module.

(2) The master control module outputs conversion signals to the digital-to-analog conversion module according to the pre-stored current values, namely, $I_1$ = 50 mA and $I_2$ = 100 mA, and after the digital-to-analog conversion module receives the conversion signals of the master control module, in the digital-to-analog conversion chip of DAC108S085, the output channel VoutH pin outputs a corresponding voltage value $V_{1i}$ of 0.5 V, and the output channel VoutG pin outputs a corresponding voltage value $V_{2i}$ of 1V.(3) The multi-channel current buffer module buffers the current values $V_{1i}$ and $V_{2i}$ output by the digital-to-analog conversion module in the current buffer module 1 and the current buffer module 2, respectively. When receiving a control signal to turn on the NMOS transistor, a single current buffer module forms a three-times attenuation circuit with the other current buffer module, the voltage input to the constant current adjustment module needs to be amplified in phase through the third operational amplifier U5 to ensure that the voltage is equal to a set voltage, $V_{1o}$ ($V_{1o} = V_{1i}*K = 0.5*3 = 1.5$ V) and $V_{2o}$ ($V_{2o} = V_{2i}*K = 1*3 = 3$ V) are output, and then $V_{1o}$ or $V_{2o}$ is attenuated to $V_{1i}$ or $V_{2i}$ before being transmitted to the constant current adjustment module.

(4) After receiving the brightness switching instruction through the communication module, the master control module directly transmits IO signals where CTRL1 is a high-level and CTRL2 is a low-level to control the multi-channel current buffer module to transmit $V_{1i}$ to the constant current adjustment module.

(5) The constant current adjustment module outputs

$$I_{1o} = \frac{V_{1i}}{R_{15}} = 0.5/10 = 50$$

the current value $I_{1o}$ (mA) through a constant current negative feedback circuit having the fourth operational amplifier U6 as the core to adjust the brightness of the light source module.

(6) After receiving the brightness switching instruction through the communication module again, the master control module directly transmits IO signals where CTRL1 is a low-level and CTRL2 is a high-level to control the multi-channel current buffer module to transmit $V_{2i}$ to the constant current adjustment module.

(7) The constant current adjustment module outputs

$$I_{2o} = \frac{V_{2i}}{R_{15}} = 1/10 = 100$$

the current value $I_{2o}$ (mA) through the constant current negative feedback circuit having the fourth operational amplifier U6 as the core to adjust the brightness of the light source module.

(8) When receiving a new current value transmitted by the communication module, the master control module repeats the steps (1) to (7).

Although the terms such as communication module, master control module, digital-to-analog conversion module, multi-channel current buffer module, constant current adjustment module and light source module are used more in the present disclosure, the possibility of using other terms is not excluded. These terms are used merely for more conveniently describing and explaining the nature of the present disclosure. It is contrary to the spirit of the present disclosure to interpret them as any additional limitations.

The fast switching circuit for light source brightness provided in the embodiments of the present disclosure is composed of the communication module, the master control module, the digital-to-analog conversion module, the multi-channel current buffer module, the constant current adjustment module and the light source module. The current values corresponding to the multiple brightness values are buffered so that the direct hardware switching can be enabled when needed, thereby greatly reducing the time required for light source brightness switching, greatly increasing the stroboscopic speed of a light source controller and having a relatively high market promotion value.

Heretofore, the description of the preceding embodiments is provided for purposes of illustration and description. It is not intended to be exhaustive or to limit the present disclosure. Single elements or features of a particular embodiment are not generally limited to the particular embodiment, but, where applicable, may be interchanged and used in selected embodiments, even if not specifically shown or described. In many aspects, the same elements or features may also vary. Such variations are not to be regarded as departing from the present disclosure, and all such modifications are intended to be included within the scope of the present disclosure.

Example embodiments are provided so that the present disclosure will become thorough and will fully convey the scope to those skilled in the art. For a thorough understanding of the embodiments of the present disclosure, numerous details are set forth, such as examples of particular parts, devices and methods. It is apparent to those skilled in the art that particular details do not need to be used, the example embodiments may be implemented in many different forms, and neither should be construed as limiting the scope of the present disclosure. In some example embodiments, well-known procedures, well-known device structures and well-known technologies are not described in detail.

Professional terms used herein are merely used for describing particular example embodiments and are not intended to be limiting. Unless the context clearly indicates the contrary, singular forms "a", "an" and "the" used herein may be intended to include plural forms. The terms "including" and "having" are intended to be included and thereby are to specify the presence of the described features, wholes, steps, operations, elements and/or components, but are not to exclude the presence or additional presence of one or more other features, wholes, steps, operations, elements, components and/or combinations thereof. Unless the order of execution is explicitly indicated, the method steps, processes and operations described herein are not to be construed as necessarily being executed in the particular order described and illustrated. It is also to be understood that additional or optional steps may be used.

When an element or layer is described as being "on", "engaged with", "connected to", or "joined to" another element or layer, the element or layer may be directly on the particular element or layer, the element or layer may be directly engaged with the particular element or layer, the element or layer may be directly connected to the particular element or layer, the element or layer may be directly joined to the particular element or layer, or intervening elements or layers may be present. Rather, when an element or layer is described as being "directly on", "directly engaged with", "directly connected to", or "directly joined to" another element or layer, intervening elements or layers may not be present. Other words used for describing element relationships should be explained in a similar way (such as "between", "directly between", "adjacent", or "directly adjacent"). The term "and/or" used herein includes any and all combinations of one or more of the associated listed items. Although the terms "first", "second" and "third" are possibly used herein for describing various elements, components, regions, layers and/or portions, these elements, components, regions, layers and/or portions are not limited by these terms. These terms may be merely used for distinguishing one element, component, region, or portion from another. Unless clearly indicated by context, the terms used herein, such as "first" and "second", and other numerical value terms do not indicate a sequence or order. Therefore, a first element, component, region, layer, or portion that is described below may use the terms of a second element, component, region, layer, or portion without departing from the guidance of the example embodiments.

Relative spatial terms such as "inside", "outside", "below", "under" "lower part", "over", or "upper part" may be used herein for ease of description to describe a relationship between one element or feature and another or more elements or features, as shown in the figures. The relative spatial terms may be intended to include different orientations of a device, in addition to those depicted in the figures. For example, if the device in the figures is flipped, an element described as being "under another element or feature" or "below another element or feature" is oriented as "over the particular element or feature". Therefore, the example term "under" may include two orientations: upwards and downwards. The device may be otherwise oriented (rotated by 90 degrees or otherwise oriented) and explained by a relative description of the space herein.

## Claims

1. A fast switching circuit for light source brightness, comprising a communication module, a master control module, a digital-to-analog conversion module, a multi-channel current buffer module, a constant current adjustment module and a light source module, wherein

   the communication module is connected to the master control module;
   the digital-to-analog conversion module is connected to the master control module and the multi-channel current buffer module;
   the multi-channel current buffer module is connected to the master control module and the constant current adjustment module;
   the constant current adjustment module is connected to the light source module;
   the communication module is configured to receive a to-be-used current value and pre-store the current value in the master control module;
   the master control module is configured to output a conversion signal to the digital-to-analog conversion module after receiving the pre-stored current value;
   the digital-to-analog conversion module is configured to output a corresponding current value after receiving the conversion signal;
   the multi-channel current buffer module is configured to buffer the current value output by the digital-to-analog conversion module;
   the communication module is further configured to receive a brightness switching instruction and transmit the brightness switching instruction to the master control module;
   the master control module is further configured to output a control signal to control the multi-channel current buffer module after receiving the brightness switching instruction;
   the multi-channel current buffer module is further configured to output the buffered current value to the constant current adjustment module after receiving the control signal; and
   the constant current adjustment module is configured to change a current value output to the light source module to adjust brightness of the light source module after receiving the current value input by the multi-channel current buffer module.

2. The fast switching circuit for light source brightness according to claim 1, wherein each of the master control module has at least three output terminals, the digital-to-analog conversion module has at least two output terminals, and the multi-channel current buffer module comprises at least two current buffer modules,

a first input terminal of each of the at least two current buffer modules is connected to a respective one of the at least two output terminals of the digital-to-analog conversion module, and a second input terminal of each of the at least two current buffer modules is connected to a respective one of the at least three output terminals of the master control module;

an output terminal of each of the at least two current buffer modules is connected to an input terminal of the constant current adjustment module;

an input terminal of the digital-to-analog conversion module is connected to a respective one of the at least three output terminals of the master control module;

an output terminal of the communication module is connected to an input terminal of the master control module; and

an output terminal of the constant current adjustment module is connected to an input terminal of the light source module.

3. The fast switching circuit for light source brightness according to claim 2, wherein the communication module comprises a serial port conversion chip (U7) and an electrical connector (J1); and
a GND pin, an RIN pin and a TOUT pin of the serial port conversion chip (U7) are connected to the electrical connector (J1), a TIN pin and an ROUT pin of the serial port conversion chip (U7) are connected to the master control module, and a VCC pin of the serial port conversion chip (U7) is connected to a pull-up voltage source.

4. The fast switching circuit for light source brightness according to claim 3, wherein the master control module comprises a master control chip (U1), a first resistance (R1), a second resistance (R2), a third resistance (R3), a first capacitance (C1), a second capacitance (C2), a third capacitance (C3) and a crystal oscillator (Y1);

a U1_TX pin of the master control chip (U1) is connected to the TIN pin of the serial port conversion chip (U7), and a U1_RX of the master control chip (U1) is connected to the ROUT pin of the serial port conversion chip (U7);

a PC4 pin and a PC5 pin of the master control chip (U1) are connected to the multi-channel current buffer module, a PC0 pin, a PC1 pin, a PC2 pin and a PC3 pin of the master control chip (U1) are connected to the digital-to-analog conversion module, and an NRST pin of the master control chip (U1) is grounded;

one terminal of the first resistance (R1) is connected to a VDD pin of the master control chip (U1), another terminal of the first resistance (R1) is grounded, and the VDD pin of the master control chip (U1) is connected to the pull-up voltage source;

one terminal of the first capacitance (C1) is connected to a VSS pin of the master control chip (U1), and another terminal of the first capacitance (C1) is grounded;

one terminal of the second resistance (R2) is connected to a BOOT1 pin of the master control chip (U1), and another terminal of the second resistance (R2) is grounded;

one terminal of the third resistance (R3) is connected to a BOOT2 pin of the master control chip (U1), and another terminal of the third resistance (R3) is grounded;

one terminal of the second capacitance (C2) is connected to an OSC_0 pin of the master control chip (U1), and another terminal of the second capacitance (C2) is grounded;

one terminal of the third capacitance (C3) is connected to an OCS_1 pin of the master control chip (U1), and another terminal of the third capacitance (C3) is grounded; and

one terminal of the crystal oscillator (Y1) is connected between the second capacitance (C2) and the OSC_0 pin of the master control chip (U1), and another terminal of the crystal oscillator (Y1) is connected between the third capacitance (C3) and the OCS_1 pin of the master control chip (U1).

5. The fast switching circuit for light source brightness according to claim 4, wherein the digital-to-analog conversion module comprises an analog-to-digital conversion chip (U2),

a VA pin, a Vrefl pin and a Vref2 pin of the analog-to-digital conversion chip U2 are connected to the pull-up voltage source;

an SYNC pin of the analog-to-digital conversion chip (U2) is connected to the PC3 pin of the master control chip (U1), an SCLK pin of the analog-to-digital conversion chip (U2) is connected to the PC2 pin of the master control chip (U1), a D1 pin of the analog-to-digital conversion chip (U2) is connected to the PC1 pin of the master control chip (U1), a DOUT pin of the analog-to-digital conversion chip (U2) is connected to the PC0 pin of the master control chip (U1), and a GND pin of the analog-to-digital conversion chip (U2) is grounded; and

a VoutH pin and a VoutG pin of the analog-to-digital conversion chip (U2) are connected to the multi-channel current buffer module.

6. The fast switching circuit for light source brightness according to claim 5, wherein the multi-channel current buffer module comprises a follower circuit and two current buffer modules, and the two current buffer modules are a first current buffer module and a second current buffer module;

the first current buffer module comprises a first operational amplifier (U3), a first N-channel metal oxide semiconductor, NMOS, transistor (Q1), a fifth resistance (R5), a sixth resistance (R6), a seventh resistance (R7) and an eighth resistance (R8);
the second current buffer module comprises a second operational amplifier (U4), a second NMOS transistor (Q2), a fourth resistance (R4), a ninth resistance (R9), a tenth resistance (R10) and an eleventh resistance (R11);
the follower circuit comprises a third operational amplifier (U5), a twelfth resistance (R12) and a thirteenth resistance (R13);
a positive input terminal of the first operational amplifier (U3) is connected to the VoutH pin of the analog-to-digital conversion chip (U2), a negative input terminal of the first operational amplifier (U3) is grounded through the eighth resistance (R8), and an output terminal of the first operational amplifier (U3) is connected to one terminal of the sixth resistance (R6);
another terminal of the sixth resistance (R6) is connected to one terminal of the seventh resistance (R7), and another terminal of the seventh resistance (R7) is connected to a positive input terminal of the third operational amplifier (U5);
one terminal of the fifth resistance (R5) is connected between the output terminal of the first operational amplifier (U3) and the sixth resistance (R6), and another terminal of the fifth resistance (R5) is connected between the negative input terminal of the first operational amplifier (U3) and the eighth resistance (R8);
a gate of the first NMOS transistor (Q1) is connected to the PC4 pin of the master control chip (U1), a source of the first NMOS transistor (Q1) is grounded, and a drain of the first NMOS transistor (Q1) is connected between the sixth resistance (R6) and the seventh resistance (R7);

a positive input terminal of the second operational amplifier (U4) is connected to the VoutG pin of the analog-to-digital conversion chip (U2), a negative input terminal of the second operational amplifier (U4) is grounded through the fourth resistance (R4), and an output terminal of the second operational amplifier (U4) is connected to one terminal of the tenth resistance (R10);
another terminal of the tenth resistance (R10) is connected to one terminal of the eleventh resistance (R11), and another terminal of the eleventh resistance (R11) is connected to the positive input terminal of the third operational amplifier (U5);
one terminal of the ninth resistance (R9) is connected between the output terminal of the second operational amplifier (U4) and the tenth resistance (R10), and another terminal of the ninth resistance (R9) is connected between the negative input terminal of the second operational amplifier (U4) and the fourth resistance (R4);
a gate of the second NMOS transistor (Q2) is connected to the PC5 pin of the master control chip (U1), a source of the second NMOS transistor (Q2) is grounded, and a drain of the second NMOS transistor (Q2) is connected between the tenth resistance (R10) and the eleventh resistance (R11); and
a negative input terminal of the third operational amplifier (U5) is grounded through the twelfth resistance (R12) and the thirteenth resistance (R13), and an output terminal of the third operational amplifier (U5) is connected between the twelfth resistance (R12) and the thirteenth resistance (R13) and is connected to the constant current adjustment module.

7. The fast switching circuit for light source brightness according to claim 6, wherein a power supply terminal of the first operational amplifier (U3), a power supply terminal of the second operational amplifier (U4) and a power supply terminal of the third operational amplifier (U5) are connected to the pull-up voltage source, and a grounding terminal of the first operational amplifier (U3), a grounding terminal of the second operational amplifier (U4) and a grounding terminal of the third operational amplifier (U5) are grounded.

8. The fast switching circuit for light source brightness according to claim 7, wherein the constant current adjustment module comprises a fourth operational amplifier (U6), a third NMOS transistor (Q3), a fourteenth resistance (R14) and a fifteenth resistance (R15);

a positive input terminal of the fourth operational amplifier (U6) is connected to the output terminal of the third operational amplifier (U5), a negative input terminal of the fourth operational amplifier (U6) is grounded through the fourteenth resistance (R14) and the fifteenth resistance (R15), and an output terminal of the fourth operational amplifier (U6) is connected to a gate of the third NMOS transistor (Q3); and

a source of the third NMOS transistor (Q3) is connected between the fourteenth resistance (R14) and the fifteenth resistance (R15), and a drain of the third NMOS transistor (Q3) is connected to the light source module.

9. The fast switching circuit for light source brightness according to claim 1, wherein a power supply terminal of a fourth operational amplifier (U6) is connected to a pull-up voltage source, and a grounding terminal of the fourth operational amplifier (U6) is grounded.

10. The fast switching circuit for light source brightness according to claim 1, wherein the light source module is composed of a plurality of light-emitting diodes.

Communication
module

OUT

IN

OUT

Master
control
module

OUT

OUT

Digital-to-
analog
conversion
module

IN

OUT1

OUTN

Multi-channel current
buffer module

IN

Current buffer
module 1

IN          OUT

IN          OUT

Current buffer
module N

IN

Constant
current
adjustment
module

IN                OUT

Light
source
module

IN

**FIG. 1**

**FIG. 2**

## INTERNATIONAL SEARCH REPORT

| International application No. |
| --- |
| **PCT/CN2022/101776** |

### A. CLASSIFICATION OF SUBJECT MATTER

H05K 5/02(2006.01)i

According to International Patent Classification (IPC) or to both national classification and IPC

### B. FIELDS SEARCHED

Minimum documentation searched (classification system followed by classification symbols)

H05K

Documentation searched other than minimum documentation to the extent that such documents are included in the fields searched

Electronic data base consulted during the international search (name of data base and, where practicable, search terms used)

CNABS; CNTXT; WPABS; VEN; EPTXT; USTXT; WOTXT; JPTXT; KRTXT: 数模转化, 电流, 缓存, 恒流, 恒压, 光源, 亮度, 快速, 迅速, 切换, 调节, 转换, 机器视觉, 频闪, A/D, D/A, digital analog conversion, current, cache, buffer, constant current, constant voltage, light, bright, rapid, fast, switch, shift, adjust, turn to, machine vision, stroboscopic

### C. DOCUMENTS CONSIDERED TO BE RELEVANT

| Category* | Citation of document, with indication, where appropriate, of the relevant passages | Relevant to claim No. |
| --- | --- | --- |
| A | CN 205385627 U (DONGGUAN RUISHI OPTOELECTRONICS TECHNOLOGY CO., LTD.) 13 July 2016 (2016-07-13)<br>description, paragraphs 9-42, and figures 1-7 | 1-10 |
| A | CN 105792481 A (OPT MACHINE VISION TECH CO., LTD.) 20 July 2016 (2016-07-20)<br>entire document | 1-10 |
| A | CN 107731173 A (HKC CO., LTD.) 23 February 2018 (2018-02-23)<br>entire document | 1-10 |
| A | CN 214256693 U (XIAMEN HI-LIGHT LIGHTING CO., LTD. et al.) 21 September 2021 (2021-09-21)<br>entire document | 1-10 |
| A | CN 105445677 A (GUANGZHOU HONGLI OPTO-ELECTRONIC CO., LTD.) 30 March 2016 (2016-03-30)<br>entire document | 1-10 |
| A | WO 2018188678 A1 (CESKA ENERGETICKO-AUDITORSKA SPOLECNOST, S.R.O.) 18 October 2018 (2018-10-18)<br>entire document | 1-10 |

☑ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 January 2023** | **28 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/101776**

**C.    DOCUMENTS CONSIDERED TO BE RELEVANT**

| Category* | Citation of document, with indication, where appropriate, of the relevant passages | Relevant to claim No. |
|---|---|---|
| A | DE 102012203296 B3 (OSRAM GMBH) 25 July 2013 (2013-07-25)<br>entire document | 1-10 |

Form PCT/ISA/210 (second sheet) (January 2015)

**INTERNATIONAL SEARCH REPORT**
**Information on patent family members**

International application No.

**PCT/CN2022/101776**

| Patent document cited in search report | | | Publication date (day/month/year) | Patent family member(s) | | | Publication date (day/month/year) |
|---|---|---|---|---|---|---|---|
| CN | 205385627 | U | 13 July 2016 | None | | | |
| CN | 105792481 | A | 20 July 2016 | None | | | |
| CN | 107731173 | A | 23 February 2018 | WO | 2019080305 | A1 | 02 May 2019 |
| CN | 214256693 | U | 21 September 2021 | None | | | |
| CN | 105445677 | A | 30 March 2016 | None | | | |
| WO | 2018188678 | A1 | 18 October 2018 | EP | 3596797 | A1 | 22 January 2020 |
| | | | | CZ | 2017200 | A3 | 04 April 2018 |
| | | | | US | 2020059099 | A1 | 20 February 2020 |
| | | | | CZ | 307222 | B6 | 04 April 2018 |
| | | | | EP | 3596797 | A4 | 06 May 2020 |
| | | | | US | 10938212 | B2 | 02 March 2021 |
| DE | 102012203296 | B3 | 25 July 2013 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210612325X